# EUROPÄISCHE PATENTSCHRIFT

(11) **EP 3 266 963 B1**
(45) Veröffentlichungstag und Bekanntmachung des Hinweises auf die Patenterteilung: **13.10.2021**
(21) Anmeldenummer: 17178537.1
(22) Anmeldetag: 28.06.2017
(51) Int. Cl.: E05B 47/00, H01F 7/02

(54) **VERRIEGELUNGSSYSTEM**
LOCKING SYSTEM
SYSTÈME DE VERROUILLAGE

(30) Priorität: 04.07.2016 DE 102016112214
(43) Veröffentlichungstag der Anmeldung: 10.01.2018
(73) Patentinhaber: Linkert - Konstruktion - Entwicklung -Bearbeitung und Fertigung von Kunststoffprodukten, 30966 Hemmingen (DE)
(72) Erfinder: Linkert, Fabian, 30880 Laatzen (DE)
(74) Vertreter: Holz, Christian

(56) Entgegenhaltungen:
- US-A- 5 485 733

## Beschreibung

Die vorliegende Erfindung betrifft ein Verriegelungssystem gemäß dem Oberbegriff des Anspruchs 1 sowie einen ersten Verriegelungspartner für ein derartiges Verriegelungssystem gemäß des Anspruchs 14.

Es sind verschiedenste Anwendungen bekannt, bei denen eine mechanische Verbindung zwischen zwei Verbindungspartnern formschlüssig und bzw. oder kraftschlüssig hergestellt werden soll. Insbesondere sind verschiedenste Anwendungen bekannt, bei denen die Beweglichkeit zwischen zwei Verbindungspartnern durch gegenseitiges Verriegeln bei Bedarf unterbunden und ebenso wieder zerstörungsfrei ermöglicht werden soll.

Zu diesen Anwendungen gehört auch der Modellbau, insbesondere der Flugzeugmodellbau. Flugzeugmodelle können Längen- bzw. Spannweiten aufweisen, so dass sie nicht am Stück z.B. in einem Pkw transportiert werden können. Daher werden die Flugzeugmodelle z.B. in den Rumpf und die beiden Tragflächen zerlegbar ausgeführt, um als zwar längliche jedoch im Querschnitt vergleichsweise kompakte Einzelelemente im Pkw transportiert werden zu können. Zur Benutzung z.B. auf einer Wiese als Startgelände können die Tragflächen als ein Verbindungs- bzw. Verriegelungspartner dann am Rumpf als anderen Verbindungs- bzw. Verriegelungspartner montiert werden, um das Flugzeugmodell flugfähig zu machen.

Zur Befestigung z.B. der Tragflächen am Rumpf ist es bekannt, Gummizüge und Kunststoffhaken zu verwenden. Diese sind jedoch nur bedingt haltbar, weil sie sich bei den Zugbelastungen der angreifenden Kräfte während des Fluges dehnen und sogar überdehnen und reißen bzw. lösen können. Dies kann zum Absturz des Flugzeugmodells mit Beschädigungen oder sogar totaler Zerstörung führen. Auch kann ein Absturz für den Bediener und ggfs. weitere Personen in der Umgebung gefährlich sein.

Alternativ können Schraubverbindungen eingesetzt werden, um z.B. die Tragflächen am Rumpf sicher und haltbar zu befestigen. Das Anziehen der Schrauben kann jedoch vergleichsweise lange dauern, so dass der Zusammenbau und spätere Auseinanderbau des Flugzeugmodells einen wesentlichen Teil der für die Nutzung zur Verfügung stehenden Zeit einnehmen kann. Nachteilig ist auch, dass Schraubverbindungen von außen zumindest teilweise sichtbar sein können, was für den Modellbauer einen gravierenden optischen Mangel darstellen kann.

Dies gilt ebenso für andere Bauteile des Flugzeugmodells wie z.B. die Kabinenhaube, deren üblicher Federverschluss stets eine Öffnung benötigt, um von außen bedient werden zu können. Ferner können auch Wartungsklappen am Rumpf zu verriegeln sein.

Nachteilig ist ferner, dass alle Verbindungen oder Verriegelungen bei einem Flugzeugmodell aufgrund der geringen Größe des Modells schlecht zugänglich und entsprechend schwierig und unangenehm zu bedienen sein können. Dies gilt insbesondere für Bereiche innerhalb des Rumpfes sowie den Höhenleitwerksbereich.

Eine Aufgabe der vorliegenden Erfindung ist es, ein Verriegelungssystem der eingangs beschriebenen Art bereitzustellen, so dass eine Verrieglung bzw. Entriegelung ohne von außen sichtbare Bedienelemente durchgeführt werden kann. Insbesondere soll dies bei einer formschlüssigen Verriegelung bzw. Entriegelung ermöglicht werden. Dabei soll diese Verrieglung bzw. Entriegelung möglichst einfach, kostengünstig und bzw. oder zuverlässig erfolgen. Insbesondere soll die Verriegelung bzw. Entriegelung von Hand und ohne den Einsatz von Antrieben ausgeführt werden können.

Die Aufgabe wird erfindungsgemäß durch die Merkmale des kennzeichnenden Teils des Anspruchs 1 sowie durch die Merkmale des Anspruchs 14 gelöst. Vorteilhafte Weiterbildungen sind in den Unteransprüchen beschrieben.

Somit betrifft die vorliegende Erfindung ein Verriegelungssystem zur Verriegelung zweier Verriegelungspartner. Das Verriegelungssystem kann auch als Verbindungssystem bezeichnet werden. Vorzugsweise erfolgt die Verriegelung formschlüssig mittels mechanischer Elemente. Die Verriegelungspartner können z.B. eine Tragfläche und der Rumpf eines Flugzeugmodells sein bzw. dessen Kabinenabdeckung und der Rumpf. Das erfindungsgemäße Verriegelungssystem kann jedoch auch auf anderen technischen Gebieten genutzt werden. Beispielsweise können hiermit die Türen eines Möbelstücks, wie z.B. eines Schrankens verriegelt werden, da auch bei Schränken eine optisch unsichtbare Verriegelung wünschenswert sein kann. Insbesondere kann es für Designer-Objekte vorteilhaft sein, auf optisch störende Verbindungsteile wie Bohrungen, Schrauben, Klipse etc. verzichten zu können. Auch können Türen, Klappen und dergleichen bei industriellen Anwendungen auf diese Weise ver- und entriegelt werden.

Der erste Verriegelungspartner weist einen Riegel auf, der auch als Bolzen oder dergleichen bezeichnet werden kann. Der Riegel ist vorzugsweise aus Metall ausgebildet, um eine möglichst hohe mechanische Belastbarkeit zu ermöglichen. Dies kann jedoch je nach Anwendung auch durch einen Riegel aus Kunststoff oder aus einem Verbundmaterial erreicht werden. Für z.B. den Modellbau ist es aus Gründen der Gewichtsreduzierung auch denkbar, den Riegel aus Holz und insbesondere aus dem leichten Balsaholz zu fertigen.

Der Riegel ist in einer translatorischen Bewegungsrichtung zwischen einer Entriegelungsstellung und einer Verriegelungsstellung beweglich.

Derartige Verriegelungssysteme sind in vielfältigen Ausführungsformen und für verschiedenste Anwendungen bekannt. Üblicherweise sind hierzu jedoch von außen sichtbare Bedienelemente, wie z.B. ein Schieber zum Bewegen des Riegels bzw. Bolzens erforderlich, welche die Oberfläche des ersten Verriegelungspartners durchdringen müssen, um von Benutzer bedienbar zu sein. Alternativ können elektrische, hydraulische oder pneumatische Antriebe innerhalb des ersten Verriegelungspartners eingesetzt werden, um den Riegel bei geschlossener Oberfläche des ersten Verriegelungspartners bedienen zu können. Dies erfordert jedoch einen höheren Aufwand und verbraucht Energie zur Bestätigung der Verrieglung und bzw. oder Entriegelung. Auch könnte die Verriegelung bei einem Ausfall der Energiezufuhr aufgehoben werden.

Der vorliegenden Erfindung liegt daher die Erkenntnis zugrunde, dass die Betätigung einer Verrieglung und bzw. oder Entriegelung mittels magnetischer Kräfte durch die Oberfläche des ersten Verriegelungspartners hindurch erfolgen kann, so dass die Oberfläche des ersten Verriegelungspartners geschlossen ausgeführt werden kann. Gleichzeitig kann auf Antriebe verzichtet werden, die mit Energie zu versorgen sind, um die Verrieglung und bzw. oder Entriegelung durchführen. Ferner kann mittels magnetischer Kräfte eine haltbare und auch selbsttätig haltende Verriegelung erreicht werden.

Zu diesem Zweck weist der Riegel des ersten Verriegelungspartners einen ersten Magneten auf. Ferner weist der erste Verriegelungspartner einen zweiten Magneten auf. Beide Magnete sind vorzugsweise Permanentmagnete, so dass z.B. auf die Speisung mit elektrischer Energie eines Elektromagneten verzichtet werden kann. Die vorliegende Erfindung kann jedoch auch mittels Elektromagneten, vorzugsweise mit einem Permanentmagneten als ersten Magneten und mit einem Elektromagneten als zweiten Magneten, umgesetzt werden.

Die Magnetisierungsrichtung des ersten Magneten entspricht der translatorischen Bewegungsrichtung des Riegels und die Magnetisierungsrichtung des zweiten Magneten ist senkrecht zur Magnetisierungsrichtung des ersten Magneten ausgerichtet.

Durch die zuvor beschriebene Anordnung bzw. Ausrichtung der Magnetisierungsrichtungen der beiden Magneten zueinander in Kombination mit der Bewegungsrichtung des Riegels, welche auch die Bewegungsrichtung des ersten Magneten gegenüber dem zweiten Magneten ist, kann erreicht werden, dass der erste Magnet mit seinen beiden Polen einem einzigen Pol des zweiten Magneten zugewandt ist. Dies kann bewirken, dass der Pol des ersten Magneten, dessen Magnetisierung der Magnetisierung des Pols des zweiten Magneten entspricht, von diesem entlang der Bewegungsrichtung des Riegels abgestoßen wird. Gleichzeitig kann der andere Pol des ersten Magneten von dem Pol des zweiten Magneten angezogen werden.

Hierdurch kann der erste Magnet samt Riegel in dessen Bewegungsrichtung von den Anziehungs- bzw. Abstoßungskräften des zweiten Magneten in eine Position entlang der Bewegungsrichtung des Riegels bewegt werden. Ob diese Bewegung des Riegels samt ersten Magneten in die eine oder die andere Richtung der Bewegungsrichtung erfolgt, hängt davon ab, welcher der beiden Pole des zweiten Magneten dem ersten Magneten zu- bzw. abgewandt ist. Somit drücken die Magnetkräfte zwischen den beiden Magneten den Riegel stets in die Entriegelungsstellung oder in die Verriegelungsstellung, so dass diese beiden Zustände durch die Magnetkräfte eingenommen und selbsttätig gehalten werden können. Für einen Wechsel des Riegels zwischen der Entriegelungsstellung und der Verriegelungsstellung sind die Pole des ersten Magneten oder die Pole des zweiten Magneten gegeneinander zu tauschen, so dass die Anziehungs- bzw. Abstoßungskräfte zwischen den beiden Magneten den Riegel samt ersten Magnet über die Mitte des zweiten Magneten hinweg in die jeweils andere Position bewegen können. Auf diese Weise kann durch die Wahl der Magnetisierung des Pols eines der beiden Magneten die Bewegung des Riegels zwischen der Entriegelungsstellung und der Verriegelungsstellung einfach, eindeutig und schnell durchgeführt und der Riegel des ersten Verriegelungspartners digital zwischen seinen beiden Stellungen geschaltet werden.

Erfindungsgemäß kann auf diese Art und Weise eine einfache, kostengünstige und zuverlässige Verrieglung bzw. Entriegelung ohne von außen sichtbare Bedienelemente ermöglicht werden. Auch kann die Verriegelung bzw. Entriegelung von Hand und ohne den Einsatz von Antrieben ausgeführt werden. Ferner kann ein unsichtbarer Verriegelungsmechanismus geschaffen werden, dessen Art und Weise der Bedienbarkeit nach außen verborgen werden kann. Hierdurch kann auch verborgen werden, dass überhaupt eine Verriegelung besteht und eine Entriegelung möglich ist.

Der erste Verriegelungspartner und bzw. oder der Riegel können aus einem nichtmagnetisierbaren Material ausgebildet sein. Dies kann ein nicht-magnetisierbares Metall wie z.B. Aluminium oder Messing, Holz oder ein Kunststoff sein. Das Material könnte jedoch auch schwach magnetisierbar sein. Hierdurch kann erreicht werden, dass der erste Verriegelungspartner und bzw. oder der Riegel die zuvor beschriebenen Funktionen und Wirkungen der beiden Magnete nicht stören und bzw. oder beeinflussen.

Gemäß einem Aspekt der vorliegenden Erfindung ist der erste Magnet gegenüber dem Riegel feststehend angeordnet, wobei der zweite Magnet innerhalb des ersten Verriegelungspartners in einer Drehrichtung zwischen einer ersten Drehstellung und einer zweiten Drehstellung drehbar angeordnet ist und wobei die Drehachse der Drehrichtung des zweiten Magneten zumindest im Wesentlichen senkrecht zur Magnetisierungsrichtung des zweiten Magneten und parallel zur Bewegungsrichtung des Riegels ausgerichtet ist, so dass der zweite Magnet den ersten Magneten derart anziehen und bzw. oder abstoßen kann, so dass sich der Riegel in der ersten Drehstellung des zweiten Magneten in der Entriegelungsstellung und in der zweiten Drehstellung des zweiten Magneten in der Verriegelungsstellung befindet.

Auf diese Weise kann ein magnetischer Schaltmechanismus bereitgestellt werden. Der erste Magnet ist hierzu feststehend mit dem Riegel verbunden, so dass die Magnetisierungsrichtung des ersten Magneten vorbestimmt und gleichbleibend ist. Beispielsweise kann der Südpol zur Spitze des Riegels, welche die eigentliche Verriegelung ausführen kann, hinzeigen und der Nordpol kann von der Spitze des Riegels wegzeigen. Diese Nordpol-Südpol-Anordnung des ersten Magneten verläuft dabei parallel zu einem Pol des zweiten Magneten, welcher in seiner ersten Drehstellung die Magnetisierung eines Nordpols und in der zweiten Drehstellung die Magnetisierung eines Südpols aufweisen kann.

Die Wechselwirkung zwischen den Polen bzw. deren Magnetisierungen kann mittels Abstoßung bzw. Anziehung bewirken, dass der Riegel je nach Drehstellung des zweiten Magneten in die Entriegelungsstellung bzw. Verriegelungsstellung bewegt bzw. dort gehalten werden kann. Somit ist über die Drehung des zweiten Magneten zwischen den beiden Drehstellungen ein digitales Schalten des Riegels zwischen der Entriegelungsstellung und der Verriegelungsstellung möglich.

Gemäß einem weiteren Aspekt der vorliegenden Erfindung weist das Verriegelungssystem ferner einen dritten Magneten auf, welcher gegenüber dem zweiten Magneten derart positioniert und hinsichtlich seiner Magnetisierungsrichtung orientiert werden kann, so dass der zweite Magnet durch den dritten Magneten zwischen der ersten Drehstellung und der zweiten Drehstellung hin und her geschaltet werden kann. Dabei schließt das Positionieren des dritten Magneten gegenüber dem zweiten Magneten eine Bewegung des dritten Magneten gegenüber dem zweiten Magneten, insbesondere eine Bewegung im Wesentlichen parallel zur Drehachse des zweiten Magneten, mit ein. Der dritte Magnet ist vorzugsweise ein Stabmagnet. Der dritte Magnet kann aufgrund seiner Größe, seiner Form und bzw. oder seines Gewichts von einem Benutzer einfach und sicher in einer Hand gehalten und geführt werden.

Auf diese Weise kann ein digitales Schalten des zweiten Magneten erfolgen, indem der dritte Magnet z.B. vom Benutzer mit der Hand zum zweiten Magneten hin bzw. über diesen hinweg geführt wird. Hierdurch kann je nach der Magnetisierung des Pols des dritten Magneten, welcher dem zweiten Magneten zugewandt ist, gar keine Drehung des zweiten Magneten bei gegensinniger Magnetisierung oder eine Drehung um ca. 180° bei gleichsinniger Magnetisierung erfolgen. Hierdurch kann der dritte Magnet den zweiten Magneten hinsichtlich seiner beiden Drehstellungen schalten, was wiederum eine Bewegung des ersten Magneten samt Riegel zwischen der Verriegelungsstellung und der Entriegelungsstellung bewirken kann. Auf diese Weise kann der Benutzer den Riegel berührungslos und unsichtbar von außerhalb des ersten Verriegelungspartners schalten, wobei die gewünschte Schaltstellung des Riegels durch die Wahl der Magnetisierung des dritten Magneten, welche dem ersten Verriegelungspartner zugewandt bzw. abgewandt wird, vom Benutzer gezielt vorgegeben werden kann.

Vorzugsweise weist der dritte Magnet eine stärkere bzw. größere Magnetisierung als der erste Magnet und als der zweite Magnet auf, so dass die Orientierung des ersten bzw. zweiten Magneten durch die Magnetisierung des dritten Magneten bestimmt und vorgegeben werden kann. Auf diese Weise kann der dritte Magnet eine Drehung des ersten bzw. zweiten Magneten um ca. 180° veranlassen, was seinerseits das Schalten des Riegels bewirken kann.

Gemäß einem weiteren Aspekt der vorliegenden Erfindung ist der erste Magnet in der Bewegungsrichtung des Riegels magnetisiert und der zweite Magnet ist diametral magnetisiert. Die Magnetisierungsrichtung des ersten Magneten kann auch als axial bezeichnet werden, d.h. die magnetischen Pole des ersten Magneten liegen immer entlang der längsten Symmetrieachse. Der zweite Magnet ist diametral, d.h. senkrecht zur axialen Richtung, magnetisiert. Durch diese beiden Richtungen der Magnetisierungen in Kombination mit den Dreh- bzw. Bewegungsrichtungen der beiden Magnete zueinander kann die Wechselwirkung zwischen den Magnetfeldern der beiden Magnete erreicht werden, welche ein erfindungsgemäßes digitales Schalten des Riegels bewirken kann.

Der erste Magnet ist vorzugsweise als Stabmagnet ausgeführt. Der erste Magnet kann als Stabmagnet eine zylindrische oder rechteckige Form aufweisen. Der erste Magnet erstreckt sich dabei länger in der Bewegungsrichtung des Riegels als senkrecht zur Bewegungsrichtung. Vorzugsweise wird als erster Magnet ein zylindrischer Stabmagnet verwendet, so dass ein Verkanten des ersten Magneten bei der Bewegung in der Bewegungsrichtung des Riegels vermieden werden kann.

Der zweite Magnet kann zylindrisch bzw. stabförmig aber auch ringförmig oder als Scheibe ausgeführt sein. Vorzugsweise ist der zweite Magnet ein zylindrischer Stabmagnet.

Gemäß einem weiteren Aspekt der vorliegenden Erfindung ist der erste Magnet gegenüber dem Riegel in einer Drehrichtung zwischen einer ersten Drehstellung und einer zweiten Drehstellung drehbar angeordnet, wobei der zweite Magnet innerhalb des ersten Verriegelungspartners feststehend angeordnet ist und wobei die Drehachse der Drehrichtung des ersten Magneten zumindest im Wesentlichen senkrecht zur Magnetisierungsrichtung des ersten Magneten und senkrecht zur Bewegungsrichtung des Riegels ausgerichtet ist, so dass der zweite Magnet den ersten Magneten derart anziehen und bzw. oder abstoßen kann, so dass sich der Riegel in der ersten Drehstellung des ersten Magneten in der Entriegelungsstellung und in der zweiten Drehstellung des ersten Magneten in der Verriegelungsstellung befindet.

Die Wirkungsweise und insbesondere die Wechselwirkung zwischen den beiden Magneten entsprechen auch in diesem Fall der zuvor beschriebenen, wobei gemäß des vorliegenden Aspekts der erste Magnet relativ zum Riegel gedreht werden kann und der zweite Magnet feststehend angeordnet ist. Entsprechend gelten die zuvor beschriebenen Eigenschaften und Vorteile sinngemäß auch für diese Variante der vorliegenden Erfindung.

Gemäß einem weiteren Aspekt der vorliegenden Erfindung weist das Verriegelungssystem ferner einen dritten Magneten auf, welcher gegenüber dem ersten Magneten derart positioniert und hinsichtlich seiner Magnetisierungsrichtung orientiert werden kann, so dass der erste Magnet durch den dritten Magneten zwischen der ersten Drehstellung und der zweiten Drehstellung hin und her geschaltet werden kann. Die Funktion und die Wirkungsweise des dritten Magneten gegenüber dem ersten drehbaren Magneten entspricht der Funktion und Wirkungsweise des dritten Magneten gegenüber dem zweiten drehbaren Magneten wie zuvor beschrieben, so dass diese Erklärungen auch hier Gültigkeit haben und nicht wiederholt werden sollen.

Gemäß einem weiteren Aspekt der vorliegenden Erfindung ist der erste Magnet diametral magnetisiert und der zweite Magnet ist senkrecht zur Bewegungsrichtung des Riegels magnetisiert. Auch diese Merkmale wurden sinngemäß bereits zuvor in umgekehrter Ausführung beschrieben, so dass die entsprechenden Wirkungen und Vorteile auch hier Gültigkeit haben und nicht wiederholt werden sollen.

Gemäß einem weiteren Aspekt der vorliegenden Erfindung weist der zweite Magnet ein Paar von zweiten Magneten auf, welche einander gegenüberliegend beidseitig des ersten Magneten angeordnet sind. Auf diese Weise kann eine gleichmäßigere und symmetrischere magnetische Wirkung zwischen dem ersten Magneten und den beiden zweiten Magneten erreicht werden, so dass insbesondere ein Verkeilen des Riegels bei der Bewegung in der Bewegungsrichtung vermieden werden kann.

Gemäß einem weiteren Aspekt der vorliegenden Erfindung weist der zweite Verriegelungspartner eine Aussparung auf, in die der Riegel in der Verriegelungsstellung eingreift. Hierzu kann der Riegel in der Verriegelungsstellung aus dem ersten Verriegelungspartner herausragen und in die korrespondierende Aussparung des zweiten Verriegelungspartners eingreifen. Dies kann insbesondere eine Verriegelung in einer Bewegungsrichtung der beiden Verriegelungspartner zueinander bewirken, welche senkrecht zur Bewegungsrichtung des Riegels orientiert ist. Hierdurch kann die gewünschte Verriegelung zwischen den beiden Verriegelungspartnern erreicht werden. Die Verriegelung findet vorzugsweise rein formschlüssig statt, wobei die Verriegelung auch teilweise kraftschlüssig sein kann.

Gemäß einem weiteren Aspekt der vorliegenden Erfindung weist der Riegel eine Schräge auf, welche ausgebildet ist, sodass der Riegel in seiner Verriegelungsstellung mittels seiner Schräge aus der Verriegelungsstellung herausgedrückt werden kann, wenn der zweite Verriegelungspartner bei seiner Bewegung in die Verriegelungsstellung die Schräge des Riegels kontaktiert.

Auf diese Weise kann der Riegel in die Verriegelungsstellung gebracht werden, auch wenn noch keine Verriegelung stattfinden kann. Wird dann der zweite Verriegelungspartner gegen die Schräge des Riegels geführt und drückt hierdurch den Riegel in seiner Bewegungsrichtung wieder aus der Verriegelungsstellung heraus in die Entriegelungsstellung zurück, so kann der Riegel magnetisch gefedert nachgeben. Hat der zweite Verriegelungspartner den Riegel passiert, so wird der Riegel selbsttätig wieder durch die magnetischen Kräfte des ersten und zweiten Magneten in seine Verriegelungsstellung zurückgedrückt. Auf diese Weise kann ein selbsttätiges Verrasten des zweiten Verriegelungspartners in der Verriegelungsstellung erfolgen. Dies kann das Verriegeln für den Benutzer einfacher gestalten, da keine Bedienung des Riegels in der Verriegelungsstellung mehr erfolgen muss.

Gemäß einem weiteren Aspekt der vorliegenden Erfindung weist der zweite Verriegelungspartner einen Bolzen auf, der in der Verriegelungsstellung in den zweiten Verriegelungspartner eingeführt und dort durch den Riegel blockiert ist, wobei der Bolzen vorzugsweise einen Vorsprung aufweist, hinter den der Riegel in der Verriegelungsstellung greift.

In diesem Fall ragt der Bolzen des zweiten Verriegelungspartners aus dem zweiten Verriegelungspartner hervor bzw. steht von diesen ab, so dass der Bolzen des zweiten Verriegelungspartners in eine korrespondierende Aussparung des ersten Verriegelungspartners in dessen Bewegungsrichtung eingeführt werden kann. Dann kann der Riegel des ersten Verriegelungspartners den Bolzen des zweiten Verriegelungspartners in seiner Bewegungsrichtung, d.h. senkrecht zur Bewegungsrichtung des zweiten Verriegelungspartners, blockieren und hierdurch verriegeln.

Dies kann z.B. dadurch erfolgen, dass der Bolzen des zweiten Verriegelungspartners eine Aussparung oder eine Durchgangsbohrung aufweist, in die der Riegel des ersten Verriegelungspartners eingreifen kann. Dies kann zu einer sehr sicheren und stabilen Verriegelung führen.

Vorzugsweise weist der Bolzen jedoch einen Vorsprung auf, der derart ausgebildet und dem Riegel zugewandt ist, so dass der Riegel des ersten Verriegelungspartners den Vorsprung des Bolzen in der Verriegelungsstellung hintergreifen und hierdurch ein Wiederherausziehen des Bolzens aus dem ersten Verriegelungspartner in der Bewegungsrichtung des zweiten Verriegelungspartners verhindern kann. Dies kann zu einer haltbaren und gleichzeitig einfachen Verriegelung führen.

Gemäß einem weiteren Aspekt der vorliegenden Erfindung weist der Bolzen eine Schräge auf, welche ausgebildet ist, so dass der Riegel in seiner Verriegelungsstellung aus der Verriegelungsstellung herausgedrückt werden kann, wenn der zweite Verriegelungspartner bei seiner Bewegung in die Verriegelungsstellung mit der Schräge seines Bolzens den Riegel kontaktiert. Auf diese Weise kann auch bei dieser Art der Verriegelung ein selbsttätiges Verrasten des Riegels des ersten Verriegelungspartners erfolgen, wie bereits zuvor beschrieben.

Gemäß einem weiteren Aspekt der vorliegenden Erfindung ist der Riegel in der Bewegungsrichtung zwischen der Entriegelungsstellung und der Verriegelungsstellung innerhalb einer Kammer beweglich, wobei die Kammer gegenüber dem ersten Verriegelungspartner mediendicht geschlossen ist. Die Kammer kann als Aussparung im Material des ersten Verriegelungspartners ausgebildet sein, so dass sie lediglich von außen zugänglich ist. Dies kann zu einem mediendichten, insbesondere gas- und bzw. oder fluiddichten, Abschluss der Kammer gegenüber dem Inneren des ersten Verbindungspartners führen, was für viele Anwendungen vorteilhaft sein kann, um z.B. Flüssigkeiten und Schmutz vom Inneren des Verbindungspartners fernzuhalten.

Die Kammer kann zweitteilig bzw. von außen zu öffnen vorgesehen sein, um den Riegel samt ersten Magneten bei der Montage in der Kammer anordnen zu können. Die Kammer kann derart ausgebildet sein, dass die Kammer den ersten Magneten beweglich und dennoch mit möglichst wenig seitlichem Spiel aufnehmen kann, um den ersten Magneten beweglich zu führen und ein Verkeilen zu vermeiden. Gleichzeitig kann eine Öffnung der Kammer nach außen hin schmaler als der erste Magnet sein, um den ersten Magneten innerhalb der Kammer halten und seine Beweglichkeit zwischen der Entriegelungsstellung und der Verriegelungsstellung einschränken zu können.

Die vorliegende Erfindung betrifft auch einen ersten Verriegelungspartner eines Verriegelungssystems zur Verriegelung zweier Verriegelungspartner wie zuvor beschrieben, wobei der erste Verriegelungspartner einen Riegel aufweist, welcher in einer translatorischen Bewegungsrichtung zwischen einer Entriegelungsstellung und einer Verriegelungsstellung beweglich ist, wobei der Riegel einen ersten Magneten aufweist, wobei der erste Verriegelungspartner ferner einen zweiten Magneten aufweist, wobei die Magnetisierungsrichtung des ersten Magneten der Bewegungsrichtung des Riegels entspricht, und wobei die Magnetisierungsrichtung des zweiten Magneten zumindest im Wesentlichen senkrecht zur Magnetisierungsrichtung des ersten Magneten ausgerichtet ist. Auf diese Weise kann ein erster Verriegelungspartner von zwei Verriegelungspartnern bereitgestellt werden, um das zuvor beschriebene Verriegelungssystem zu schaffen.

Der erste Verriegelungspartner kann beispielsweise eine Tragfläche oder der Rumpf eines Modellbauflugzeugs sein. Auch kann der erste Verriegelungspartner beispielsweise eine erste Tür von zwei Türen z.B. eines Schrankes z.B. für den Haushalt oder für eine industrielle Anwendung sein. Auch kann der erste Verriegelungspartner z.B. ein Gestell oder ein Rahmen eines Möbelstücks, eines Haushaltsgerätes oder einer industriellen Anwendung sein.

Dem Verständnis der vorliegenden Erfindung dient auch ein zweiter Verriegelungspartner eines Verriegelungssystems zur Verriegelung zweier Verriegelungspartner wie zuvor beschrieben, wobei der zweite Verriegelungspartner eine Aussparung aufweist, in die ein Riegel des ersten Verriegelungspartners in einer Verriegelungsstellung eingreift, oder wobei der zweite Verriegelungspartner einen Bolzen aufweist, der in der Verriegelungsstellung in den zweiten Verriegelungspartner eingeführt und dort durch den Riegel blockiert ist, wobei der Bolzen vorzugsweise einen Vorsprung aufweist, hinter den der Riegel in der Verriegelungsstellung greift. Auf diese Weise kann ein zweiter Verriegelungspartner von zwei Verriegelungspartnern bereitgestellt werden, um das zuvor beschriebene Verriegelungssystem zu schaffen.

Der zweite Verriegelungspartner kann beispielsweise der Rumpf, die Kabinenhaube oder eine Wartungsklappe eines Modellbauflugzeugs sein. Auch kann der zweite Verriegelungspartner beispielsweise eine zweite Tür von zwei Türen z.B. eines Schrankes für z.B. den Haushalt oder für eine industrielle Anwendung sein. Auch kann der zweite Verriegelungspartner eine Tür, eine Klappe oder eine Schublade eines Möbelstücks, Haushaltsgerätes oder einer industriellen Anwendung sein.

Mehrere Ausführungsbeispiele und weitere Vorteile der Erfindung werden nachstehend im Zusammenhang mit den folgenden Figuren erläutert. Darin zeigt:
- Fig. 1: eine schematische Schnittdarstellung eines erfindungsgemäßen Verriegelungssystems gemäß eines ersten Ausführungsbeispiels in einer ersten Stellung;
- Fig. 2: eine schematische Schnittdarstellung des Verriegelungssystems der Fig. 1 in einer zweiten Stellung;
- Fig. 3: eine schematische Schnittdarstellung des Verriegelungssystems der Fig. 1 in einer dritten Stellung;
- Fig. 4: eine schematische Schnittdarstellung eines erfindungsgemäßen Verriegelungssystems gemäß eines zweiten Ausführungsbeispiels in einer ersten Stellung;
- Fig. 5: eine schematische Schnittdarstellung des Verriegelungssystems der Fig. 4 in einer zweiten Stellung;
- Fig. 6: eine schematische Schnittdarstellung des Verriegelungssystems der Fig. 4 in einer dritten Stellung;
- Fig. 7: eine schematische Schnittdarstellung des Verriegelungssystems der Fig. 4 in einer vierten Stellung;
- Fig. 8: eine schematische Schnittdarstellung eines erfindungsgemäßen Verriegelungssystems gemäß eines dritten Ausführungsbeispiels in einer ersten Stellung;
- Fig. 9: eine schematische Schnittdarstellung des Verriegelungssystems der Fig. 8 in einer zweiten Stellung;
- Fig. 10: eine schematische Schnittdarstellung des Verriegelungssystems der Fig. 8 in einer dritten Stellung;
- Fig. 11: eine schematische Schnittdarstellung eines erfindungsgemäßen Verriegelungssystems gemäß eines vierten Ausführungsbeispiels in einer ersten Stellung;
- Fig. 12: eine schematische Schnittdarstellung des Verriegelungssystems der Fig. 11 in einer zweiten Stellung;
- Fig. 13: eine schematische Schnittdarstellung des Verriegelungssystems der Fig. 11 in einer dritten Stellung;
- Fig. 14: eine schematische Schnittdarstellung des Verriegelungssystems der Fig. 11 in einer vierten Stellung;
- Fig. 15: eine schematische Schnittdarstellung eines erfindungsgemäßen Verriegelungssystems gemäß eines fünften Ausführungsbeispiels in einer ersten Stellung;
- Fig. 16: eine schematische Schnittdarstellung des Verriegelungssystems der Fig. 15 in einer zweiten Stellung;
- Fig. 17: eine schematische Schnittdarstellung des Verriegelungssystems der Fig. 15 in einer dritten Stellung;
- Fig. 18: eine schematische Schnittdarstellung eines erfindungsgemäßen Verriegelungssystems gemäß eines sechsten Ausführungsbeispiels in einer ersten Stellung;
- Fig. 19: eine schematische Schnittdarstellung des Verriegelungssystems der Fig. 18 in einer zweiten Stellung;
- Fig. 20: eine schematische Schnittdarstellung des Verriegelungssystems der Fig. 18 in einer dritten Stellung; und
- Fig. 21: eine schematische Schnittdarstellung des Verriegelungssystems der Fig. 18 in einer vierten Stellung.

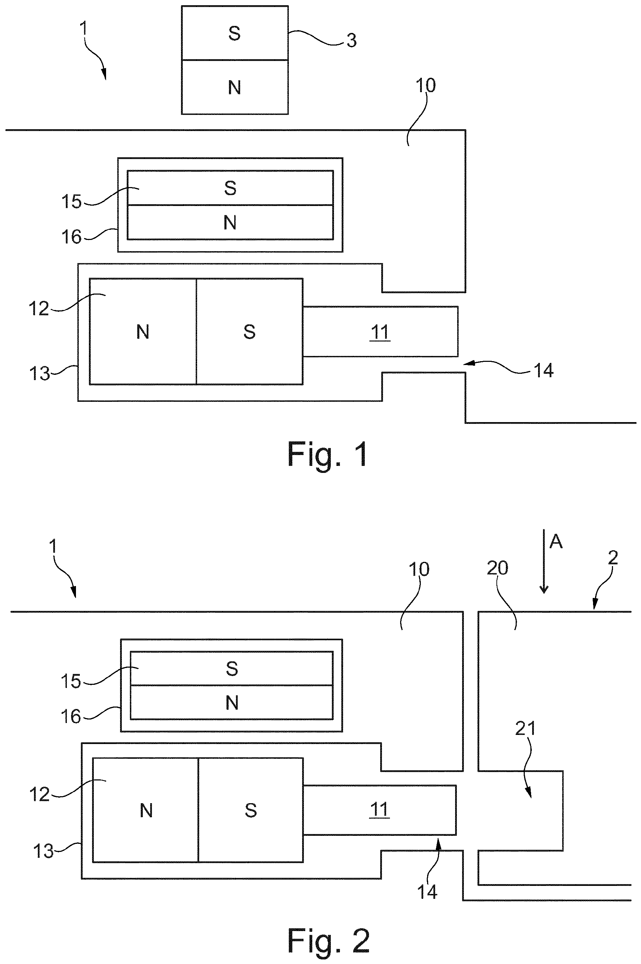

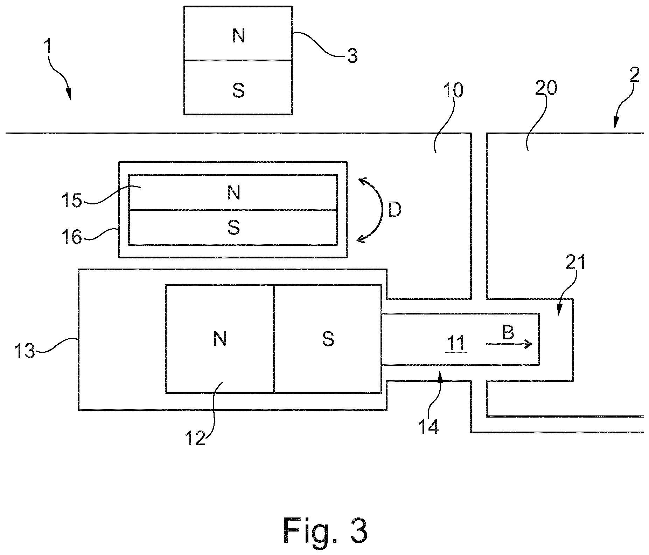

Fig. 1 zeigt eine schematische Schnittdarstellung eines erfindungsgemäßen Verriegelungssystems 1, 2 gemäß eines ersten Ausführungsbeispiels in einer ersten Stellung. Fig. 2 zeigt eine schematische Schnittdarstellung des Verriegelungssystems 1, 2 der Fig. 1 in einer zweiten Stellung. Fig. 3 zeigt eine schematische Schnittdarstellung des Verriegelungssystems 1, 2 der Fig. 1 in einer dritten Stellung.

Das erfindungsgemäße Verriegelungssystem 1, 2 weist einen ersten Verriegelungspartner 1 auf, welcher in diesem ersten Ausführungsbeispiel der Rumpf 1 eines Flugzeugmodells ist. Das erfindungsgemäße Verriegelungssystem 1, 2 weist ferner einen zweiten Verriegelungspartner 2 auf, welcher in diesem ersten Ausführungsbeispiel die Kabinenhaube 2 des Flugzeugmodells ist.

Der erste Verriegelungspartner 1 weist einen Körper 10 auf. Das Material des Körpers 10 ist als Kunststoff nicht-magnetisierbar ausgebildet, könnte jedoch auch schwach magnetisierbar sein, ohne die Funktion der vorliegenden Erfindung unterbinden zu können. In dem Körper 10 ist ein Riegel 11 angeordnet, welcher in bzw. entgegen einer translatorischen Bewegungsrichtung B innerhalb des Körpers 10 derart beweglich ist, dass der Riegel 11 in einer Entriegelungsstellung zumindest im Wesentlichen bis vollständig innerhalb des Körpers 10 verschwinden und in einer Verriegelungsstellung so weit mit seiner Spitze aus dem Körper 10 hervorragen kann, dass eine Verriegelung des zweiten Verriegelungspartners 2 ermöglicht wird. Der Riegel 11 ist in diesem Ausführungsbeispiel magnetisierbar ausgebildet, siehe unten.

Der zweite Verriegelungspartner 2 weist eine korrespondierende Aussparung 21 innerhalb seines Körpers 20 auf, welche derart ausgebildet und angeordnet ist, dass der Riegel 11 des ersten Verriegelungspartners 1 in der Verriegelungsstellung in die Aussparung 21 des zweiten Verriegelungspartners 2 eingreifen und diesen in dessen Bewegungsrichtung A blockieren kann. Der Riegel 11 ist hierzu im Wesentlichen innerhalb einer Kammer 13 angeordnet, welche mittels einer Öffnung 14 mit der Umgebung des Körpers 10 verbunden ist. Der Riegel 11 kann durch diese Öffnung 14 hervorragen bzw. durch diese Öffnung 14 in dem Körper 10 verschwinden.

Der Riegel 11 weist einen ersten Magneten 12 auf, welcher entgegen der Bewegungsrichtung B an der der Öffnung 14 bzw. der Spitze abgewandten Seite des Riegels 11 angeordnet ist. Der erste Magnet 12 ist in diesem ersten Ausführungsbeispiel feststehend an dem Riegel 11 angeordnet, was durch die Magnetkräfte des ersten Magneten 12 erreicht werden kann, welche auf das magnetisierbare Material des Riegels 11 wirken und diesen halten können. Der erste Magnet 12 ist mit seiner Magnetisierungsrichtung in bzw. entgegen der Bewegungsrichtung B ausgerichtet, wobei der Südpol S zur Spitze bzw. zum Ende des Riegels 11 bzw. zur Öffnung 14 hin und der Nordpol N in die entgegengesetzte Richtung zeigt. Der erste Magnet 12 ist ein axial-magnetisierter zylindrischer Permanentmagnet, dessen Durchmesser größer als der Durchmesser der Öffnung 14 ausgebildet ist, so dass der Riegel 11 durch den ersten Magneten 12 innerhalb der Kammer 13 gehalten werden und sich innerhalb der Kammer 13 zwischen der Entriegelungsstellung (Fig. 1 und 2) und der Verriegelungsstellung (Fig. 3) in bzw. entgegen der Bewegungsrichtung B hin und her bewegen kann.

Der erste Verriegelungspartner 1 weist ferner einen zweiten Magneten 15 auf, welcher ebenfalls ein zylindrischer Permanentmagnet ist. Der zweite Magnet 15 ist in einer separaten Kammer 16 innerhalb des ersten Verriegelungspartners 1 derart in der Nähe des ersten Magneten 12 angeordnet, dass die beiden Magneten 12, 15 durch das Material des Körpers 10 des ersten Verriegelungspartners 1 hindurch magnetisch aufeinander wirken können. Die beiden Kammern 13, 16 sind durch das Material des ersten Verriegelungspartners 1 mediendicht voneinander getrennt. Der zweite Magnet 15 ist diametral magnetisiert und um seine Längsachse drehbar innerhalb seiner Kammer 16 angeordnet. In einer ersten Drehstellung des zweiten Magneten 15 zeigt der Nordpol N zum Riegel 11 bzw. zum ersten Magneten 12 hin und in einer zweiten Drehstellung des zweiten Magneten 15 zeigt der Südpol S zum Riegel 11 hin.

Diese Drehung des zweiten Magneten 15 kann von außerhalb des ersten Verriegelungspartners 1 mittels eines dritten Magneten 3 als Schaltmagnet 3 durch das Material des ersten Verriegelungspartners 1 hindurch bewirkt werden. Der Schaltmagnet 3 ist als permanenterregter axial-magnetisierter Stabmagnet ausgeführt und kann von einem Benutzer mit der Hand frei gegenüber dem ersten Verriegelungspartner 1 vorzugsweise in einem Abstand von bis zu 20 mm bewegt werden. Der zweite Magnet 15 ist in der Nähe der Oberfläche des Körpers 10 des ersten Verriegelungspartners 1 in diesem angeordnet, so dass der zweite Magnet 15 und der Schaltmagnet 3 durch das Material des Körpers 10 des ersten Verriegelungspartners 1 hindurch magnetisch aufeinander wirken können.

Eine Verriegelung der beiden Verriegelungspartner 1, 2 miteinander läuft gemäß des ersten Ausführungsbeispiels der vorliegenden Erfindung wie folgt ab:
Wie in der Fig. 1 gezeigt, wird zuerst der Schaltmagnet 3 vom Benutzer mit seinem Nordpol N über den Bereich der Oberfläche des Körpers 10 des ersten Verriegelungspartners 1 gehalten bzw. hinweg bewegt, wo der zweite Magnet 15 angeordnet ist. Der Nordpol N des Schaltmagneten 3 zieht dabei den Südpol S des zweiten Magneten 15 an und stößt gleichzeitig den Nordpol N des zweiten Magneten 15 ab, wobei die magnetischen Abstoßungskräfte stärken wirken als die magnetischen Anziehungskräfte. Hierdurch wird der drehbare zweite Magnet 15 ggfs. in seine erste Drehstellung gebracht und derart ausgerichtet, dass der Südpol S des zweiten Magneten 15 zum Schaltmagneten 3 hin und der Nordpol N des zweiten Magneten 15 vom Schaltmagneten 3 weg zeigt.

Da hierdurch der Nordpol N des zweiten Magneten 15 zum ersten Magneten 12 hin ausgerichtet ist, zieht der Nordpol N des zweiten Magneten 15 den Südpol S des ersten Magneten 12 an und stößt den Nordpol N des ersten Magneten 12 ab. Hierdurch wird der Südpol S des ersten Magneten 12 entgegen der Bewegungsrichtung B des Riegels 11 möglichst mittig unter den zweiten Magneten 15 gezogen und der Nordpol N des ersten Magneten 12 möglichst weit von dem zweiten Magneten 15 weg bewegt. Dabei wird diese Beweglichkeit nach links hin entgegen der Bewegungsrichtung B (siehe z.B. Fig. 3) durch die Kammer 13 des ersten Magneten 12 begrenzt. Hierdurch wird der Riegel 11 nach links bewegt und in die Öffnung 14 des Körpers 10 des ersten Verriegelungspartners 1 eingezogen, so dass der Riegel 11 nicht aus der Öffnung 14 herausragt. Daher kann diese Stellung als Entriegelungsstellung bezeichnet werden.

Wie in der Fig. 2 dargestellt, kann nun der Schaltmagnet 3 vom Benutzer entfernt werden, da die Entriegelungsstellung eingenommen wurde. Dabei wird die Entriegelungsstellung selbsttätig von den beiden Magneten 12, 15 gehalten, da sich ihre Pole in dieser Stellung wie zuvor beschrieben weiterhin abstoßen bzw. anziehen und somit diese Stellung stabilisieren.

Nun kann der zweite Verrieglungspartner 2 mit seiner Aussparung 21 derart gegenüber dem ersten Verriegelungspartner 1 positioniert werden, dass der Riegel 11 des ersten Verriegelungspartners 1 in seiner Bewegungsrichtung B der Aussparung 21 des zweiten Verriegelungspartners 2 gegenüberliegt.

Wie in der Fig. 3 gezeigt, kann nun der Schaltmagnet 3 vom Benutzer mit der umgekehrten Magnetisierungsrichtung, d.h. mit dem Südpol S dem zweiten Magneten 15 zugewandt, über den Bereich der Oberfläche des Körpers 10 des ersten Verriegelungspartners 1 gehalten bzw. hinweg bewegt werden. Dies führt zu einer Drehbewegung des zweiten Magneten 15 um seine Längsachse in einer Drehrichtung D, so dass nun der Südpol S des zweiten Magneten 15 dem ersten Magneten 12 zugewandt wird. Nun wird der Nordpol N des ersten Magneten 12 vom Südpol S des zweiten Magneten 15 angezogen und der Südpol S des ersten Magneten 12 vom Südpol S des zweiten Magneten 15 abgestoßen. Dies führt zu einer Bewegung des Riegels 11 in der Bewegungsrichtung B nach rechts, so dass der Riegel 11 mit seiner Spitze, d.h. seinem dem ersten Magneten 12 abgewandten Ende, durch die Öffnung 14 des Körpers 10 des ersten Verrieglungspartners 1 aus diesem herausragend in die Aussparung 21 des zweiten Verrieglungspartners 2 eingreift.

Hierdurch wird der zweite Verriegelungspartner 2 in seiner Bewegungsrichtung A gegenüber dem ersten Verriegelungspartner 1 verriegelt, so dass diese Stellung des Riegels 11 als Verriegelungsstellung bezeichnet werden kann. Der Schaltmagnet 3 kann nun vom Benutzer entfernt werden. Auch diese Stellung wird durch die magnetischen Anziehungs- bzw. Abstoßungskräfte der beiden Magneten 12, 15 zueinander selbsttätig gehalten.

Zur Entriegelung der beiden Verriegelungspartner 1, 2 ist der Schaltmagnet 3 gemäß der Darstellung und Beschreibung der Fig. 1 erneut zu verwenden, so dass der Riegel 11 wieder in seine Entriegelungsstellung gemäß der Fig. 2 bewegt und dann der zweite Verriegelungspartner 2 gemäß der Fig. 1 entfernt werden kann.

Auf diese Weise kann erfindungsgemäß eine formschlüssige Verrieglung bzw. Entriegelung zweier Verriegelungspartner 1, 2 ohne von außen sichtbare Bedienelemente durchgeführt werden. Die Verrieglung bzw. Entriegelung wird einfach, kostengünstig und verlässlich haltend sowie von Hand und ohne den Einsatz von Antrieben erreicht. Auch kann das Verriegeln sowie Entriegeln ohne Sichtkontakt zum Verriegelungsmechanismus ausgeführt werden.

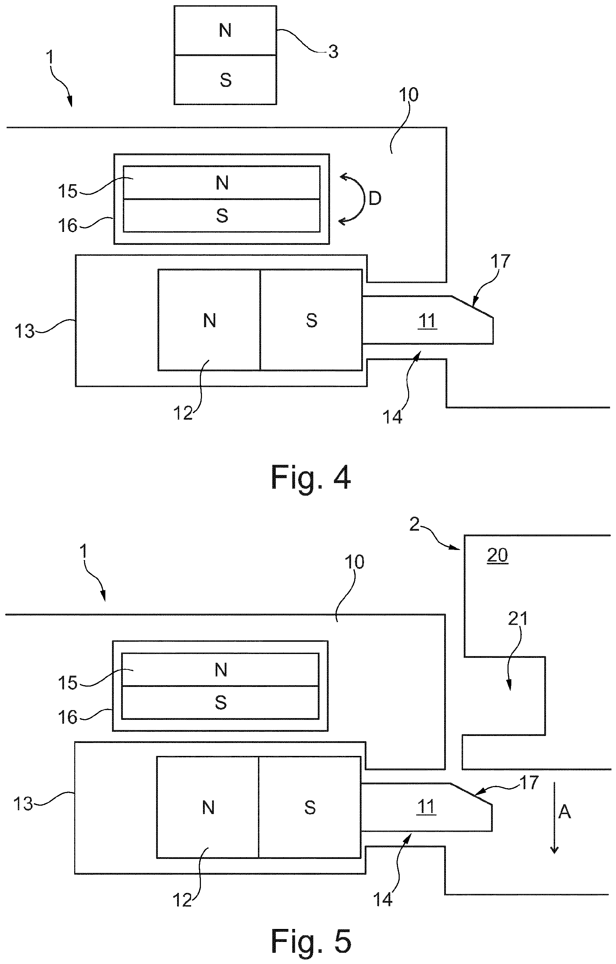

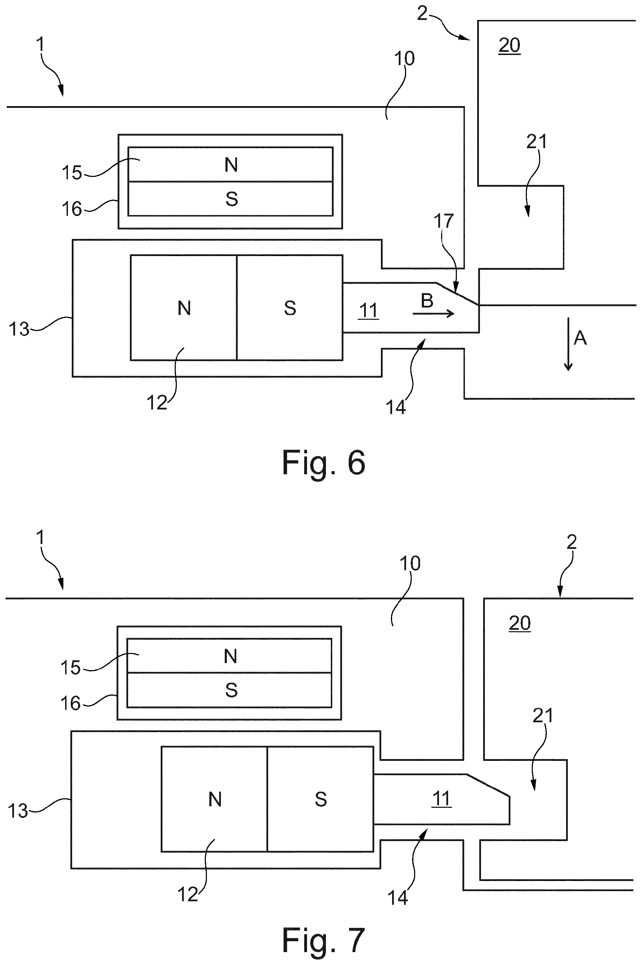

Fig. 4 zeigt eine schematische Schnittdarstellung eines erfindungsgemäßen Verriegelungssystems 1, 2 gemäß eines zweiten Ausführungsbeispiels in einer ersten Stellung. Fig. 5 zeigt eine schematische Schnittdarstellung des Verriegelungssystems 1, 2 der Fig. 4 in einer zweiten Stellung. Fig. 6 zeigt eine schematische Schnittdarstellung des Verriegelungssystems 1, 2 der Fig. 4 in einer dritten Stellung. Fig. 7 zeigt eine schematische Schnittdarstellung des Verriegelungssystems 1, 2 der Fig. 4 in einer vierten Stellung.

Die Verriegelung gemäß des zweiten Ausführungsbeispiels läuft vergleichbar wie die Verriegelung des ersten Ausführungsbeispiels ab. Jedoch weist der Riegel 11 an seinem dem ersten Magneten 12 abgewandten Ende eine Schräge 17 auf, welche dem Körper 20 des zweiten Verriegelungspartners 2 bei dessen Bewegung in seiner Bewegungsrichtung A in die Verriegelungsstellung zugewandt ist. Mittels dieser Schräge 17 kann eine selbsttätige Verrastung des Riegels 11 in der Aussparung 21 des zweiten Verriegelungspartners 2 wie folgt erreicht werden:
Wie in der Fig. 4 dargestellt, beginnt die Verriegelung der beiden Verriegelungspartner 1, 2 gemäß des zweiten Ausführungsbeispiels in der Verriegelungsstellung des Riegels 11. Diese wird wie beim ersten Ausführungsbeispiel beschrieben eingenommen mit dem Unterschied, dass der zweite Verriegelungspartner 2 noch abwesend ist. Somit ragt der Riegel 11 aus der Öffnung 14 heraus, ohne in die Aussparung 21 einzugreifen.

Wie in der Fig. 5 dargestellt, wird nun der zweite Verriegelungspartner 2 in seiner Bewegungsrichtung A in die Verriegelungsstellung hin bewegt. Dabei kommt der Körper 20 des zweiten Verriegelungspartners 2 mit der Schräge 17 des Riegels 11 in Kontakt und drückt den Riegel 11 entgegen seiner Bewegungsrichtung B aus seiner Verriegelungsstellung in den Körper 10 des ersten Verriegelungspartners 1 zurück, siehe Fig. 6. Der Riegel 11 widersetzt sich dieser Bewegung aufgrund der magnetischen Anziehungs- und Abstoßungskräfte, so dass der Riegel 11 durch den Körper 20 des zweiten Verriegelungskörpers 2 magnetisch federnd eingedrückt wird.

Hat der zweite Verriegelungspartner 2 seine Bewegung in der Bewegungsrichtung A abgeschlossen und seine Verriegelungsstellung erreicht, siehe Fig. 7, so liegt dem Riegel 11 in seiner Bewegungsrichtung B die Aussparung 21 des zweiten Verriegelungspartners 2 gegenüber. Somit wird der Riegel 11 nicht mehr vom zweiten Verriegelungspartner 2 eingedrückt und kann durch die magnetischen Kräfte zwischen den beiden Magneten 12, 15 in die Aussparung 21 des zweiten Verriegelungspartners 2 eingeführt werden.

Auf diese Weise kann die Verriegelungsstellung durch ein selbsttätiges Verrasten eingenommen werden, so dass der Benutzer zum Verriegeln der beiden Verriegelungspartner 1, 2 den Schaltmagneten 3 lediglich ein Mal verwenden muss. Ferner kann die Verriegelungsstellung des Riegels 11 mittels des Schaltmagneten 3 bereits eingenommen werden, bevor der zweite Verrieglungspartner 2 zu handhaben ist. Somit kann die Montage z.B. eines Flugzeugmodells vereinfacht werden, weil der Schaltmagnet 3 nicht mehr verwendet werden muss, wenn die beiden Verriegelungspartner 1, 2 wie in der Fig. 2 dargestellt zueinander positioniert wurden.

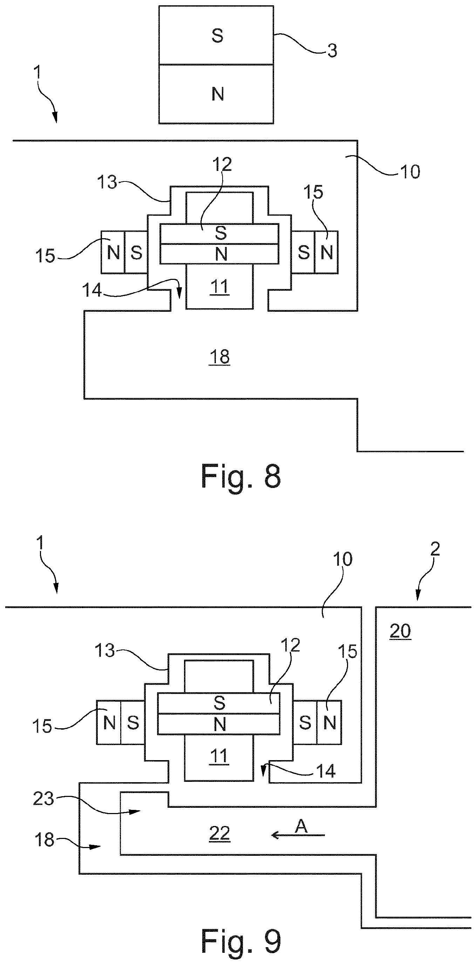

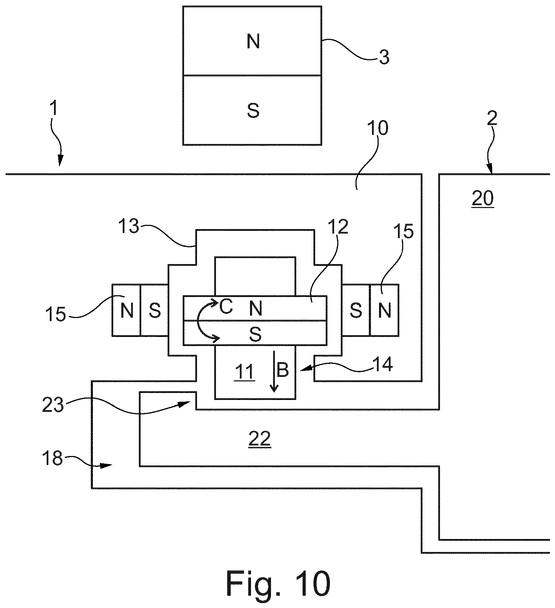

Fig. 8 zeigt eine schematische Schnittdarstellung eines erfindungsgemäßen Verriegelungssystems 1, 2 gemäß eines dritten Ausführungsbeispiels in einer ersten Stellung. Fig. 9 zeigt eine schematische Schnittdarstellung des Verriegelungssystems 1, 2 der Fig. 8 in einer zweiten Stellung. Fig. 10 zeigt eine schematische Schnittdarstellung des Verriegelungssystems 1, 2 der Fig. 8 in einer dritten Stellung.

In diesem dritten Ausführungsbeispiel weist der erste Verriegelungspartner 1 eine Aussparung 18 zur Aufnahme eines korrespondierenden Bolzens 22 des zweiten Verriegelungspartners 2 auf. Der Bolzen 22 weist dabei einen Vorsprung 23 auf, welcher von dem Riegel 11 des ersten Verriegelungspartners 1 hintergriffen werden kann.

Der magnetische Ver- bzw. Entriegelungsmechanismus des ersten Verriegelungspartners 1 ist dabei derart ausgestaltet, dass der erste Magnet 12 gegenüber dem Riegel 11 drehbar angeordnet ist. Der erste Magnet 12 ist dazu als diametral magnetisierter Permanentmagnet in einer Bohrung quer zur Bewegungsrichtung B des Riegels 11 angeordnet. Der Riegel 11 ist in diesem Fall nicht-magnetisierbar bzw. nur schwach magnetisierbar ausgebildet. Der zweite Magnet 15 ist als Paar von zweiten Magneten 15 feststehend angeordnet. Die beiden Magnete 15 des Paares von zweiten Magneten 15 liegen einander relativ zur Kammer 13 des ersten Magneten 12 gegenüber und zeigen jeweils mit dem gleich magnetisierten Pol, hier mit dem Südpol S, zum ersten Magneten 12 hin.

Hierdurch kann die magnetische Schaltfunktion der vorliegenden Erfindung auf alternative Art und Weise wie folgt ausgeführt werden:
Wie in der Fig. 8 gezeigt, wird mittels des Schaltmagneten 3, dessen Nordpol N dem ersten Magneten 12 zugewandt ist, die Drehstellung des ersten Magneten 12 geschaltet. Der Schaltmagnet 3 kann auch in diesem Ausführungsbeispiel vom Benutzer mit der Hand frei gegenüber dem ersten Verriegelungspartner 1 vorzugsweise in einem Abstand von bis zu 20 mm bewegt werden. Dabei wird der Südpol S des ersten Magneten 12 vom Nordpol N des Schaltmagneten 3 angezogen und der Nordpol N des ersten Magneten 12 vom Nordpol N des Schaltmagneten 3 abgestoßen. Hierdurch wird gleichzeitig der Südpol S des ersten Magneten 12 von den beiden Südpolen S des zweiten Magneten 15 abgestoßen und der Nordpol N des ersten Magneten 12 von den beiden Südpolen S des zweiten Magneten 15 angezogen. Dies bewirkt eine Bewegung des ersten Magneten 12 und damit des Riegels 11 entgegen seiner Bewegungsrichtung B nach oben in die Entriegelungsstellung, in der der Riegel 11 in die Öffnung 14 vollständig eingezogen ist und damit die Aussparung 18 freigibt.

Nun wird der zweite Verriegelungspartner 2 in dessen Bewegungsrichtung A zum ersten Verriegelungspartner 1 hin bewegt, so dass der Bolzen 22 des zweiten Verriegelungspartners 2 soweit in die Aussparung 18 des ersten Verriegelungspartners 1 eingeführt wird, dass der Vorsprung 23 des Bolzens 22 die Öffnung 14 passiert, siehe Fig. 9.

Wird nun der Schaltmagnet 3 vom Benutzer mit dem Südpol S dem ersten Magneten 12 zugewandt verwendet, siehe Fig. 10, so dreht sich der erste Magnet 12 in einer Drehrichtung C um seine Drehachse in eine zweite Drehstellung, in der die Ausrichtung der Magnetisierung des ersten Magneten 12 dazu führt, dass der erste Magnet 12 samt Riegel 11 von zweiten Magneten 15 in der Bewegungsrichtung B nach unten bewegt wird. Hierdurch wird der Riegel 11 aus der Öffnung 14 soweit in die Aussparung 18 herausbewegt, dass der Riegel 11 den Vorsprung 23 des Bolzens 22 hintergreift und ein Entfernen des Bolzens 22 aus der Aussparung 18 verhindern kann. Auf diese Weise werden die beiden Verriegelungspartner 1, 2 miteinander verriegelt. Das Entriegeln kann gemäß der Fig. 8 erfolgen.

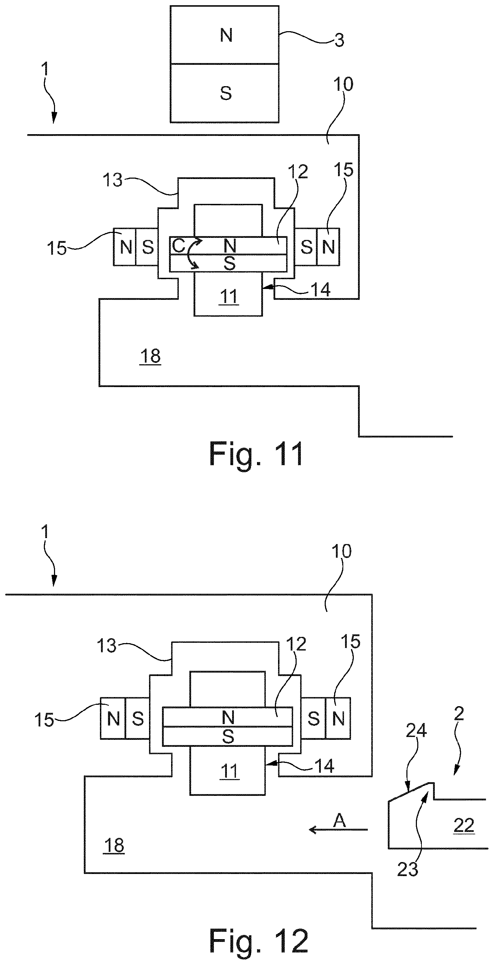

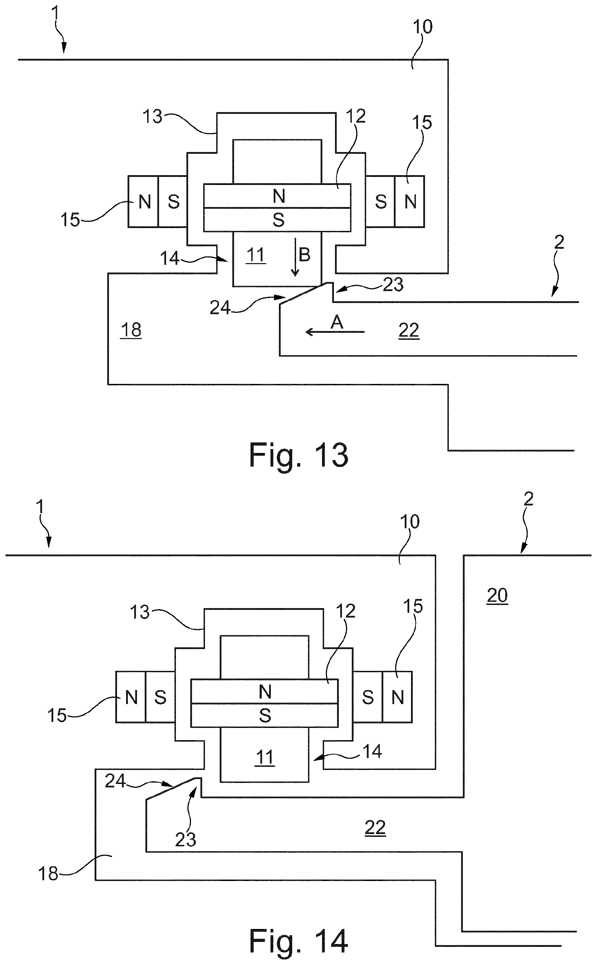

Fig. 11 zeigt eine schematische Schnittdarstellung eines erfindungsgemäßen Verriegelungssystems 1, 2 gemäß eines vierten Ausführungsbeispiels in einer ersten Stellung. Fig. 12 zeigt eine schematische Schnittdarstellung des Verriegelungssystems 1, 2 der Fig. 11 in einer zweiten Stellung. Fig. 13 zeigt eine schematische Schnittdarstellung des Verriegelungssystems 1, 2 der Fig. 11 in einer dritten Stellung. Fig. 14 zeigt eine schematische Schnittdarstellung des Verriegelungssystems 1, 2 der Fig. 11 in einer vierten Stellung.

In diesem vierten Ausführungsbeispiel weist der Bolzen 22 eine Schräge 24 auf, welche in der Bewegungsrichtung A des zweiten Verriegelungskörpers 2 der Aussparung 18 des ersten Verriegelungskörpers 1 zugewandt ist. Auf diese Weise kann analog dem zweiten Ausführungsbeispiel der Fig. 4 bis 7 ein selbsttätiges Verrasten der beiden Verriegelungspartner 1, 2 erfolgen, indem der Riegel 11 in seine Verriegelungsstellung gebracht wird (vgl. Fig. 11), der Bolzen 22 mit seiner Schräge 24 voran in die Aussparung 18 eingeführt wird (vgl. Fig. 12), die Schräge 24 dabei eine Kante des Riegels 11 kontaktiert und den Riegel 11 hierdurch magnetisch federnd eindrückt (vgl. Fig. 13), bis der Vorsprung 23 des Bolzens 22 den Riegel 11 passiert hat und von diesem hintergriffen wird (vgl. Fig. 14).

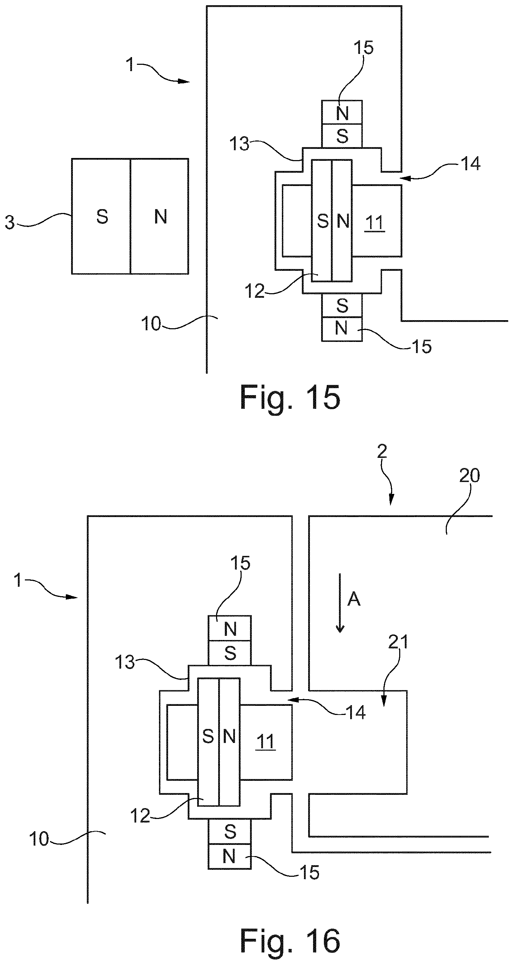

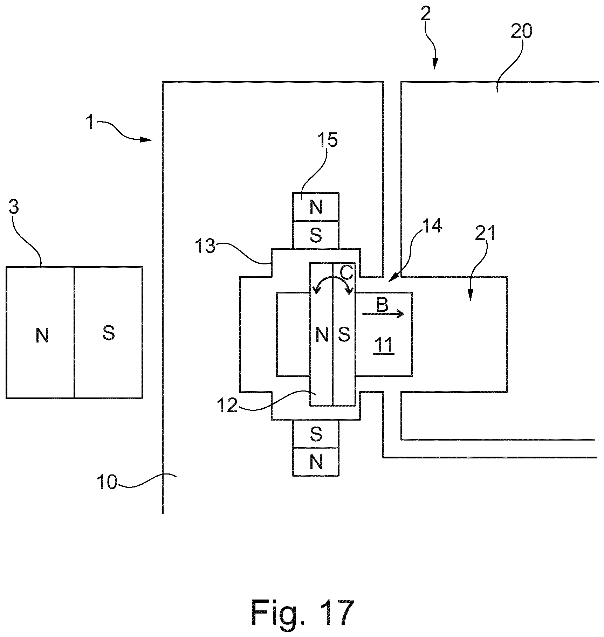

Fig. 15 zeigt eine schematische Schnittdarstellung eines erfindungsgemäßen Verriegelungssystems 1, 2 gemäß eines fünften Ausführungsbeispiels in einer ersten Stellung. Fig. 16 zeigt eine schematische Schnittdarstellung des Verriegelungssystems 1, 2 der Fig. 15 in einer zweiten Stellung. Fig. 17 zeigt eine schematische Schnittdarstellung des Verriegelungssystems 1, 2 der Fig. 15 in einer dritten Stellung.

Dieses fünfte Ausführungsbeispiel der vorliegenden Erfindung kombiniert das Zusammenwirken des Riegels 11 des ersten Verriegelungspartners 1 und der Aussparung 21 des zweiten Verriegelungspartners 2 des ersten und zweiten Ausführungsbeispiels mit dem magnetischen Schaltmechanismus des ersten Verriegelungspartners 1 des dritten und vierten Ausführungsbeispiels. Dieses Ausführungsbeispiel kann bei Gestaltungen des ersten Verriegelungskörpers 1 angewendet werden, welche den ersten Magneten 12 für den Schaltmagneten 3 in der Bewegungsrichtung B des Riegels 11 zugänglich machen.

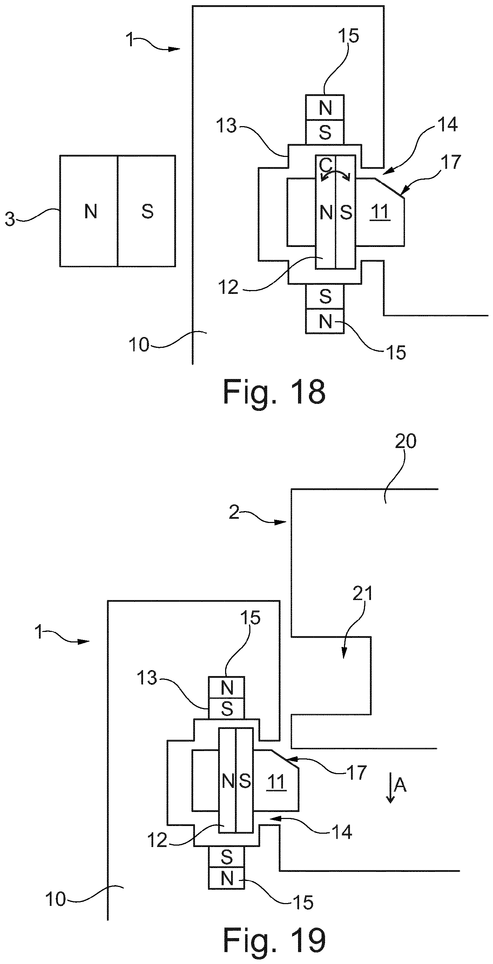

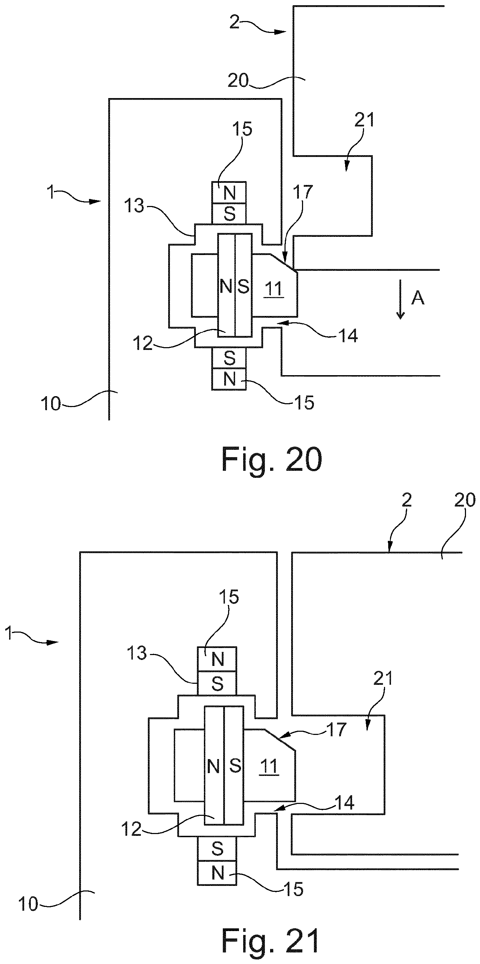

Fig. 18 zeigt eine schematische Schnittdarstellung eines erfindungsgemäßen Verriegelungssystems 1, 2 gemäß eines sechsten Ausführungsbeispiels in einer ersten Stellung. Fig. 19 zeigt eine schematische Schnittdarstellung des Verriegelungssystems 1, 2 der Fig. 18 in einer zweiten Stellung. Fig. 20 zeigt eine schematische Schnittdarstellung des Verriegelungssystems 1, 2 der Fig. 18 in einer dritten Stellung. Fig. 21 zeigt eine schematische Schnittdarstellung des Verriegelungssystems 1, 2 der Fig. 18 in einer vierten Stellung.

Dieses sechste Ausführungsbeispiel der vorliegenden Erfindung erweitert das Zusammenwirken des Riegels 11 des ersten Verriegelungspartners 1 und der Aussparung 21 des zweiten Verriegelungspartners 2 sowie den magnetischen Schaltmechanismus des ersten Verriegelungspartners 1 des fünften Ausführungsbeispiels mit der Möglichkeit des selbsttätigen Verrastens, wie beim zweiten Ausführungsbeispiel beschrieben.

Als weitere Ausführungsbeispiele ist es auch möglich, dass der erste Verriegelungspartner 1 des ersten bzw. zweiten Ausführungsbeispiels mit dem zweiten Verriegelungspartner 2 des dritten bzw. vierten Ausführungsbeispiels kombiniert wird, so dass der Bolzen 22 des zweiten Verriegelungspartners 2 durch den Riegel 11 des ersten Verriegelungspartners 1 verriegelt werden kann.

### BEZUGSZEICHENLISTE (Teil der Beschreibung)

- A: Bewegungsrichtung der Verriegelungspartner 1, 2 zueinander
- B: (translatorische) Bewegungsrichtung des Riegels 11
- C: Drehrichtung des ersten Magneten 12
- D: Drehrichtung des zweiten Magneten 15

- N: Nordpol eines Magneten
- S: Südpol eines Magneten

- 1: erster Verriegelungspartner
- 10: Körper
- 11: Riegel
- 12: erster Magnet
- 13: Kammer für ersten Magneten 12
- 14: Öffnung für Riegel 11
- 15: zweiter Magnet
- 16: Kammer für zweiten Magneten 15
- 17: Schräge des Riegels 11
- 18: Aussparung

- 2: zweiter Verriegelungspartner
- 20: Körper
- 21: Aussparung
- 22: Bolzen
- 23: Vorsprung
- 24: Schräge des Bolzens 22

- 3: dritter Magnet; Schaltmagnet

## Patentansprüche

1. Verriegelungssystem (1, 2) zur Verriegelung zweier Verriegelungspartner (1, 2),
wobei der erste Verriegelungspartner (1) einen Riegel (11) aufweist, welcher in einer translatorischen Bewegungsrichtung (B) zwischen einer Entriegelungsstellung und einer Verriegelungsstellung beweglich ist,
**dadurch gekennzeichnet, dass**
der Riegel (11) einen ersten Magneten (12) aufweist,
wobei der erste Verriegelungspartner (1) ferner einen zweiten Magneten (15) aufweist,
wobei die Magnetisierungsrichtung des ersten Magneten (12) der translatorischen Bewegungsrichtung (B) des Riegels (1) entspricht, und
wobei die Magnetisierungsrichtung des zweiten Magneten (15) senkrecht zur Magnetisierungsrichtung des ersten Magneten (12) ausgerichtet ist.

2. Verriegelungssystem (1, 2) gemäß Anspruch 1,
wobei der erste Magnet (12) gegenüber dem Riegel (11) feststehend angeordnet ist, wobei der zweite Magnet (15) innerhalb des ersten Verriegelungspartners (1) in einer Drehrichtung (D) zwischen einer ersten Drehstellung und einer zweiten Drehstellung drehbar angeordnet ist, und
wobei die Drehachse der Drehrichtung (D) des zweiten Magneten (15) zumindest im Wesentlichen senkrecht zur Magnetisierungsrichtung des zweiten Magneten (15) und parallel zur Bewegungsrichtung (B) des Riegels (11) ausgerichtet ist,
so dass der zweite Magnet (15) den ersten Magneten (12) derart anziehen und/oder abstoßen kann, so dass sich der Riegel (11) in der ersten Drehstellung des zweiten Magneten (15) in der Entriegelungsstellung und in der zweiten Drehstellung des zweiten Magneten (15) in der Verriegelungsstellung befindet.

3. Verriegelungssystem (1, 2) gemäß Anspruch 2, ferner mit
einem dritten Magneten (3), welcher gegenüber dem zweiten Magneten (15) derart positioniert und hinsichtlich seiner Magnetisierungsrichtung orientiert werden kann, so dass der zweite Magnet (15) durch den dritten Magneten (3) zwischen der ersten Drehstellung und der zweiten Drehstellung hin und her geschaltet werden kann.

4. Verriegelungssystem (1, 2) gemäß Anspruch 2 oder 3,
wobei der erste Magnet (12) in der Bewegungsrichtung (B) des Riegels (11) magnetisiert ist, und
wobei der zweite Magnet (15) diametral magnetisiert ist.

5. Verriegelungssystem (1, 2) gemäß Anspruch 1,
wobei der erste Magnet (12) gegenüber dem Riegel (11) in einer Drehrichtung (C) zwischen einer ersten Drehstellung und einer zweiten Drehstellung drehbar angeordnet ist,
wobei der zweite Magnet (15) innerhalb des ersten Verriegelungspartners (1) feststehend angeordnet ist, und
wobei die Drehachse der Drehrichtung (C) des ersten Magneten (12) zumindest im Wesentlichen senkrecht zur Magnetisierungsrichtung des ersten Magneten (12) und senkrecht zur Bewegungsrichtung (B) des Riegels (11) ausgerichtet ist,
so dass der zweite Magnet (15) den ersten Magneten (12) derart anziehen und/oder abstoßen kann, so dass sich der Riegel (11) in der ersten Drehstellung des ersten Magneten (12) in der Entriegelungsstellung und in der zweiten Drehstellung des ersten Magneten (12) in der Verriegelungsstellung befindet.

6. Verriegelungssystem (1, 2) gemäß Anspruch 5, ferner mit
einem dritten Magneten (3), welcher gegenüber dem ersten Magneten (12) derart positioniert und hinsichtlich seiner Magnetisierungsrichtung orientiert werden kann, so dass der erste Magnet (12) durch den dritten Magneten (3) zwischen der ersten Drehstellung und der zweiten Drehstellung hin und her geschaltet werden kann.

7. Verriegelungssystem (1, 2) gemäß Anspruch 5 oder 6,
wobei der erste Magnet (12) diametral magnetisiert ist, und
wobei der zweite Magnet (15) senkrecht zur Bewegungsrichtung (B) des Riegels (11) magnetisiert ist.

8. Verriegelungssystem (1, 2) gemäß einem der Ansprüche 5 bis 7,
wobei der zweite Magnet (15) ein Paar von zweiten Magneten (15) aufweist, welche einander gegenüberliegend beidseitig des ersten Magneten (12) angeordnet sind.

9. Verriegelungssystem (1, 2) gemäß einem der vorherigen Ansprüche,
wobei der zweite Verriegelungspartner (2) eine Aussparung (21) aufweist, in die der Riegel (11) in der Verriegelungsstellung eingreift.

10. Verriegelungssystem (1, 2) gemäß einem der vorherigen Ansprüche,
wobei der Riegel (11) eine Schräge (17) aufweist, welche ausgebildet ist, sodass der Riegel (11) in seiner Verriegelungsstellung mittels seiner Schräge (17) aus der Verriegelungsstellung herausgedrückt werden kann, wenn der zweite Verriegelungspartner (2) bei seiner Bewegung in die Verriegelungsstellung die Schräge (17) des Riegels (11) kontaktiert.

11. Verriegelungssystem (1, 2) gemäß einem der Ansprüche 1 bis 8 und 10,
wobei der zweite Verriegelungspartner (2) einen Bolzen (22) aufweist, der in der Verriegelungsstellung in den zweiten Verriegelungspartner (1) eingeführt und dort durch den Riegel (11) blockiert ist,
wobei der Bolzen (22) vorzugsweise einen Vorsprung (23) aufweist, hinter den der Riegel (11) in der Verriegelungsstellung greift.

12. Verriegelungssystem (1, 2) gemäß Anspruch 11,
wobei der Bolzen (22) eine Schräge (24) aufweist, welche ausgebildet ist, sodass der Riegel (11) in seiner Verriegelungsstellung aus der Verriegelungsstellung herausgedrückt werden kann, wenn der zweite Verriegelungspartner (2) bei seiner Bewegung in die Verriegelungsstellung mit der Schräge (24) seines Bolzens (22) den Riegel (11) kontaktiert.

13. Verriegelungssystem (1, 2) gemäß einem der vorherigen Ansprüche,
wobei der Riegel (11) in der Bewegungsrichtung (B) zwischen der Entriegelungsstellung und der Verriegelungsstellung innerhalb einer Kammer (13) beweglich ist,
wobei die Kammer (13) gegenüber dem ersten Verriegelungspartner (1) mediendicht geschlossen ist.

14. Erster Verriegelungspartner (1) eines Verriegelungssystems (1, 2) zur Verriegelung zweier Verriegelungspartner (1, 2) gemäß einem der Ansprüche 1 bis 13,
wobei der erste Verriegelungspartner (1) einen Riegel (11) aufweist, welcher in einer translatorischen Bewegungsrichtung (B) zwischen einer Entriegelungsstellung und einer Verriegelungsstellung beweglich ist,
wobei der Riegel (11) einen ersten Magneten (12) aufweist,
wobei der erste Verriegelungspartner (1) ferner einen zweiten Magneten (15) aufweist,
wobei die Magnetisierungsrichtung des ersten Magneten (12) der translatorischen Bewegungsrichtung (B) des Riegels (1) entspricht, und
wobei die Magnetisierungsrichtung des zweiten Magneten (15) zumindest im Wesentlichen senkrecht zur Magnetisierungsrichtung des ersten Magneten (12) ausgerichtet ist.

## Claims

1. Locking system (1, 2) for locking two locking partners (1, 2),
the first locking partner (1) having a bolt (11) which is movable in a translational direction of movement (B) between an unlocking position and a locking position,
**characterized in that**
the bolt (11) has a first magnet (12),
the first locking partner (1) also having a second magnet (15),
the direction of magnetization of the first magnet (12) corresponding to the translational direction of movement (B) of the bolt (1), and
the direction of magnetization of the second magnet (15) being oriented perpendicularly to the direction of magnetization of the first magnet (12).

2. Locking system (1, 2) according to claim 1,
wherein the first magnet (12) is arranged so as to be fixed with respect to the bolt (11), wherein the second magnet (15) is arranged within the first locking partner (1) so as to be rotatable in a direction of rotation (D) between a first rotational position and a second rotational position, and
wherein the axis of rotation of the direction of rotation (D) of the second magnet (15) is oriented at least substantially perpendicularly to the direction of magnetization of the second magnet (15) and in parallel with the direction of movement (B) of the bolt (11), so that the second magnet (15) can attract and/or repel the first magnet (12) in such a way that the bolt (11) is in the unlocking position in the first rotational position of the second magnet (15) and is in the locking position in the second rotational position of the second magnet (15).

3. Locking system (1, 2) according to claim 2, further comprising
a third magnet (3) which can be positioned with respect to the second magnet (15) and oriented with respect to its direction of magnetization so that the second magnet (15) can be switched back and forth between the first rotational position and the second rotational position by the third magnet (3).

4. Locking system (1, 2) according to either claim 2 or claim 3,
wherein the first magnet (12) is magnetized in the direction of movement (B) of the bolt (11), and
wherein the second magnet (15) is magnetized diametrically.

5. Locking system (1, 2) according to claim 1,
wherein the first magnet (12) is arranged with respect to the bolt (11) so as to be rotatable in a direction of rotation (C) between a first rotational position and a second rotational position,
wherein the second magnet (15) is arranged so as to be fixed within the first locking partner (1), and
wherein the axis of rotation of the direction of rotation (C) of the first magnet (12) is oriented at least substantially perpendicularly to the direction of magnetization of the first magnet (12) and perpendicularly to the direction of movement (B) of the bolt (11), so that the second magnet (15) can attract and/or repel the first magnet (12) in such a way that the bolt (11) is in the unlocking position in the first rotational position of the first magnet (12) and is in the locking position in the second rotational position of the first magnet (12).

6. Locking system (1, 2) according to claim 5, further comprising
a third magnet (3) which can be positioned with respect to the first magnet (12) and oriented with respect to its direction of magnetization so that the first magnet (12) can be switched back and forth between the first rotational position and the second rotational position by the third magnet (3).

7. Locking system (1, 2) according to either claim 5 or claim 6,
wherein the first magnet (12) is magnetized diametrically, and
wherein the second magnet (15) is magnetized perpendicularly to the direction of movement (B) of the bolt (11).

8. Locking system (1, 2) according to any of claims 5 to 7,
wherein the second magnet (15) has a pair of second magnets (15) which are arranged opposite one another on either side of the first magnet (12).

9. Locking system (1, 2) according to any of the preceding claims,
wherein the second locking partner (2) has a recess (21) into which the bolt (11) engages in the locking position.

10. Locking system (1, 2) according to any of the preceding claims,
wherein the bolt (11) has a slope (17) which is designed so that the bolt (11), in its locking position, can be pushed out of the locking position by means of its slope (17) when the second locking partner (2) contacts the slope (17) of the bolt (11) during its movement into the locking position.

11. Locking system (1, 2) according to any of claims 1 to 8 and 10,
wherein the second locking partner (2) has a pin (22) which, in the locking position, is inserted into the second locking partner (1) and is blocked there by the bolt (11), wherein the pin (22) preferably has a projection (23) behind which the bolt (11) engages in the locking position.

12. Locking system (1, 2) according to claim 11,
wherein the pin (22) has a slope (24) which is designed so that the bolt (11), in its locking position, can be pushed out of the locking position when the second locking partner (2) contacts the bolt (11) with the slope (24) of its pin (22) during its movement into the locking position.

13. Locking system (1, 2) according to any of the preceding claims,
wherein the bolt (11) is movable in the direction of movement (B) between the unlocking position and the locking position within a chamber (13),
wherein the chamber (13) is closed off from the first locking partner (1) in a media-tight manner.

14. First locking partner (1) of a locking system (1, 2) for locking two locking partners (1, 2) according to any of claims 1 to 13,
Wherein the first locking partner (1) has a bolt (11) which is movable in a translational direction of movement (B) between an unlocking position and a locking position,
wherein the bolt (11) has a first magnet (12),
wherein the first locking partner (1) also has a second magnet (15),
wherein the direction of magnetization of the first magnet (12) corresponds to the translational direction of movement (B) of the bolt (1), and
wherein the direction of magnetization of the second magnet (15) is oriented at least substantially perpendicularly to the direction of magnetization of the first magnet (12).

## Revendications

1. Système de verrouillage (1, 2) permettant de verrouiller deux partenaires de verrouillage (1, 2),
dans lequel le premier partenaire de verrouillage (1) comporte un pêne (11), lequel est mobile dans un sens de déplacement (B) en translation entre une position de déverrouillage et une position de verrouillage,
**caractérisé en ce que**
le pêne (11) comporte un premier aimant (12),
dans lequel le premier partenaire de verrouillage (1) comporte en outre un deuxième aimant (15),
dans lequel le sens d'aimantation du premier aimant (12) correspond au sens de déplacement (B) en translation du pêne (1), et
dans lequel le sens d'aimantation du deuxième aimant (15) est aligné perpendiculairement au sens d'aimantation du premier aimant (12).

2. Système de verrouillage (1, 2) selon la revendication 1,
dans lequel le premier aimant (12) est disposé fixement en regard du pêne (11),
dans lequel le deuxième aimant (15) est disposé de manière à pouvoir pivoter à l'intérieur du premier partenaire de verrouillage (1) dans un sens de rotation (D) entre une première position de rotation et une seconde position de rotation, et
dans lequel l'axe de rotation du sens de rotation (D) du deuxième aimant (15) est aligné au moins sensiblement perpendiculairement au sens d'aimantation du deuxième aimant (15) et parallèlement au sens de déplacement (B) du pêne (11)
de telle sorte que le deuxième aimant (15) peut attirer et/ou repousser le premier aimant (12) de telle sorte que le pêne (11) se trouve dans la position de déverrouillage dans la première position de rotation du deuxième aimant (15) et dans la position de verrouillage dans la seconde position de rotation du deuxième aimant (15).

3. Système de verrouillage (1, 2) selon la revendication 2, comportant en outre
un troisième aimant (3), lequel peut être positionné en regard du deuxième aimant (15) et orienté par rapport à son sens d'aimantation de telle sorte que le deuxième aimant (15) peut être commuté au moyen du troisième aimant (3) d'avant en arrière entre la première position de rotation et la seconde position de rotation.

4. Système de verrouillage (1, 2) selon la revendication 2 ou 3,
dans lequel le premier aimant (12) est aimanté dans le sens de déplacement (B) du pêne (11), et
dans lequel le deuxième aimant (15) est aimanté diamétralement.

5. Système de verrouillage (1, 2) selon la revendication 1,
dans lequel le premier aimant (12) est disposé de manière à pouvoir pivoter en regard du pêne (11) dans un sens de rotation (C) entre une première position de rotation et une seconde position de rotation,
dans lequel le deuxième aimant (15) est disposé de manière fixe à l'intérieur du premier partenaire de verrouillage (1), et
dans lequel l'axe de rotation du sens de rotation (C) du premier aimant (12) est aligné au moins sensiblement perpendiculairement au sens d'aimantation du premier aimant (12) et perpendiculairement au sens de déplacement (B) du pêne (11)
de telle sorte que le deuxième aimant (15) peut attirer et/ou repousser le premier aimant (12) de telle sorte que le pêne (11) se trouve dans la position de déverrouillage dans la première position de rotation du premier aimant (12) et dans la position de verrouillage dans la seconde position de rotation du premier aimant (12).

6. Système de verrouillage (1, 2) selon la revendication 5, comportant en outre
un troisième aimant (3), lequel peut être positionné en regard du premier aimant (12) et orienté par rapport à son sens d'aimantation de telle sorte que le premier aimant (12) peut être commuté au moyen du troisième aimant (3) d'avant en arrière entre la première position de rotation et la seconde position de rotation.

7. Système de verrouillage (1, 2) selon la revendication 5 ou 6,
dans lequel le premier aimant (12) est aimanté diamétralement, et
dans lequel le deuxième aimant (15) est aimanté perpendiculairement au sens de déplacement (B) du pêne (11).

8. Système de verrouillage (1, 2) selon l'une quelconque des revendications 5 à 7,
dans lequel le deuxième aimant (15) comporte une paire de deuxièmes aimants (15), lesquels sont disposés l'un en regard de l'autre des deux côtés du premier aimant (12).

9. Système de verrouillage (1, 2) selon l'une quelconque des revendications précédentes,
dans lequel le second partenaire de verrouillage (2) comporte un évidement (21) dans lequel le pêne (11) vient en prise dans la position de verrouillage.

10. Système de verrouillage (1, 2) selon l'une quelconque des revendications précédentes,
dans lequel le pêne (11) comporte une pente (17), laquelle est conçue de telle sorte que le pêne (11), dans sa position de verrouillage, peut être poussé hors de la position de verrouillage au moyen de sa pente (17) lorsque le second partenaire de verrouillage (2) entre en contact avec la pente (17) du pêne (11) lors de son déplacement dans la position de verrouillage.

11. Système de verrouillage (1, 2) selon l'une quelconque des revendications 1 à 8 et 10,
dans lequel le second partenaire de verrouillage (2) comporte un boulon (22), lequel, dans la position de verrouillage, est inséré dans le second partenaire de verrouillage (1) et est bloqué dans celui-ci par le pêne (11),
dans lequel le boulon (22) comporte de préférence une saillie (23) derrière laquelle le pêne (11) vient en prise dans la position de verrouillage.

12. Système de verrouillage (1, 2) selon la revendication 11,
dans lequel le boulon (22) comporte une pente (24), laquelle est conçue de telle sorte que le pêne (11), dans sa position de verrouillage, peut être poussé hors de la position de verrouillage lorsque le second partenaire de verrouillage (2) entre en contact avec le pêne (11) avec la pente (24) de son boulon (22) lors de son déplacement dans la position de verrouillage.

13. Système de verrouillage (1, 2) selon l'une quelconque des revendications précédentes,
dans lequel le pêne (11) est mobile dans le sens de déplacement (B) entre la position de déverrouillage et la position de verrouillage à l'intérieur d'une chambre (13),
dans lequel la chambre (13) est fermée de manière étanche aux fluides en regard du premier partenaire de verrouillage (1).

14. Premier partenaire de verrouillage (1) d'un système de verrouillage (1, 2) permettant de verrouiller deux partenaires de verrouillage (1, 2) selon l'une quelconque des revendications 1 à 13,
dans lequel le premier partenaire de verrouillage (1) comporte un pêne (11), lequel est mobile dans un sens de déplacement (B) en translation entre une position de déverrouillage et une position de verrouillage,
dans lequel le pêne (11) comporte un premier aimant (12),
dans lequel le premier partenaire de verrouillage (1) comporte en outre un deuxième aimant (15),
dans lequel le sens d'aimantation du premier aimant (12) correspond au sens de déplacement (B) en translation du pêne (1), et
dans lequel le sens d'aimantation du deuxième aimant (15) est aligné au moins sensiblement perpendiculairement au sens d'aimantation du premier aimant (12).
